Europäisches Patentamt

European Patent Office

Office européen des brevets

(19)

(11) Numéro de publication: **0 116 242**
A1

# (12) DEMANDE DE BREVET EUROPEEN

(21) Numéro de dépôt: 83402384.8

(22) Date de dépôt: 09.12.83

(51) Int. Cl.³: **G 01 N 27/90**

(30) Priorité: 21.12.82 FR 8221397

(43) Date de publication de la demande:
22.08.84 Bulletin 84/34

(84) Etats contractants désignés:
DE GB IT

(71) Demandeur: HOTCHKISS-BRANDT SOGEME H.B.S.
186, rue du Faubourg Saint-Honoré
F-75008 Paris(FR)

(72) Inventeur: DeFilippe-Verdot, François
THOMSON-CSF SCPI 173, bld Haussmann
F-75379 Paris Cedex 08(FR)

(72) Inventeur: Quinaud, Michel
THOMSON-CSF SCPI 173, bld Haussmann
F-75379 Paris Cedex 08(FR)

(74) Mandataire: Barbin le Bourhis, Joel et al,
THOMSON-CSF SCPI 173, boulevard Haussmann
F-75379 Paris Cedex 08(FR)

(54) Dispositif de mesure des défauts structurels d'objets en défilement.

(57) L'invention concerne un dispositif de mesure des défauts structurels d'objets (16) longitudinaux en mouvement par la mesure de la réaction inductive liée à l'apparition des courants de Foucault sous l'effet de l'application d'un champ électromagnétique variable au travers des objets à controler. Le capteur du dispositif est constitué de deux parties (1, 2) dissociables, opposables en vis-à-vis déterminant entre elles un évidement (5) longitudinal de section correspondant à la section des objets à mesurer et qui y coulissent. Ces deux parties contiennent chacune un cavalier (10, 11) magnétique permettant la fermeture d'un circuit magnétique passant par deux entrefers traversés perpendiculairement par les objets en défilement.

FIG_3

EP 0 116 242 A1

# DISPOSITIF DE MESURE DES DEFAUTS STRUCTURELS
## D'OBJETS EN DEFILEMENT

L'invention concerne un dispositif de mesure des défauts structurels d'objets en défilement mettant en oeuvre la mesure des courants de Foucault.

Il est connu de détecter la présence de défauts de structure affectant des objets longs, réalisés en un matériau conducteur, en faisant défiler sur la longueur de ces objets un capteur de mesure des courants de Foucault. Ce capteur comporte essentiellement un enroulement selfique alimenté par une source de courant variable et provoquant la création, dans le noyau de l'enroulement d'un champ magnétique variable. En introduisant une extrémité de l'objet long conducteur, par exemple un câble, à l'intérieur de l'enroulement selfique et en faisant coulisser cet objet d'une manière régulière en translation dans cet enroulement on peut obtenir une modification temporaire de l'impédance magnétique, résultant de la présence de cet objet, lorsque cet objet présente en un endroit un défaut de réalisation.

En effet, le champ induit par l'enroulement selfique dans le matériau conducteur est à l'origine de la création de courants électriques dits de Foucault à l'intérieur de ce conducteur. Ces courants de Foucault sont eux-mêmes à l'origine de l'excitation d'un champ magnétique de réaction tendant à réduire le champ magnétique induit. Le champ magnétique induit et le champ magnétique de réaction se composent pour former un champ magnétique total caractéristique de la nature du matériau constituant le noyau. Lorsque ce noyau est constitué par un objet long, mu en translation dans le sens de sa longueur à l'intérieur de l'enroulement selfique, l'impédance magnétique qui en résulte est constante tant que la structure de l'objet long reste la même. Lors de l'apparition d'un défaut de structure, qui peut être par exemple un défaut de densité, un défaut de continuité mécanique, un défaut de continuité chimique, ou autre ... le champ magnétique réactif est modifié. En conséquence, il entraîne une variation de l'impédance magnétique de l'enroulement. Cette variation d'impédance est exploitée de diverses manières pour déclencher une alarme signalant la présence du défaut guetté et pour permettre, éventuellement, la mise au rebut de l'objet long testé.

Les perfectionnements à ces types de capteurs ont été réalisés notamment par l'adjonction d'un deuxième enroulement selfique de noyau coaxial ou parallèle au noyau du premier enroulement et servant à la mesure du champ magnétique total tandis que le premier enroulement sert à la production du champ magnétique induit. Cependant, ces dispositifs de mesure présentent tous un inconvénient majeur : il est nécessaire à un moment donné d'introduire une extrémité de l'objet long à l'intérieur d'au moins un enroulement pour imposer au champ induit d'emprunter sur une partie de son parcours un chemin passant à travers l'objet à mesurer.

Or, ceci n'est pas toujours possible. En effet, la vérification d'objets longs déjà mis en place, tels que des câbles par exemple, et/ou déjà raccordés à leurs deux extrémités interdit l'adoption d'un tel capteur. Il en est ainsi notamment pour la fabrication de câbles électriques, en particulier d'un type multibrins, pour lesquels le processus de fabrication ne s'arrête jamais même lors d'un changement de fabrication. Dans ce cas, le changement de fabrication peut avoir pour effet que les diamètres des câbles fabriqués changent d'un produit à l'autre. Un tel capteur qui aurait été manchonné une fois pour toutes en sortie de la ligne de fabrication d'un câble considéré ne conviendrait plus au contrôle d'un câble suivant, qui serait abouté sans transition au précédent, et pour lequel il n'y a aucune raison que le diamètre de la section soit égal au diamètre de la section du câble précédent. Les diamètres des enroulements devant être adaptés le plus justement possible au diamètre des objets longs à vérifier, on conçoit que la forme de ce capteur est rédhibitoire.

L'invention a pour objet de remédier aux défauts cités par la réalisation d'un capteur induisant un champ magnétique dans l'objet en défilement avec une orientation sensiblement perpendiculaire au sens de défilement de cet objet.

L'invention propose un dispositif de mesure des défauts structurels d'objets en défilement comportant au moins un enroulement selfique alimenté par une source de courant variable pour produire un champ magnétique variable passant au travers des objets en défilement et associé à un pont de mesure pour élaborer un signal d'alarme lors de l'apparition d'un défaut dans les objets en défilement caractérisé en ce qu'il comporte des moyens pour que les lignes du champ magnétique passent au travers des objets avec une orientation sensiblement perpendiculaire à leur défilement.Cette disposition permet alors la réalisation d'un capteur en deux parties diamétralement placées de part et d'autre de l'objet long à tester.

L'invention sera mieux comprise par la description suivante donnée à titre d'exemple non limitatif, et illustrée par les figures qui l'accompagnent. Sur ces différentes figures les mêmes repères désignent les mêmes éléments. Pour des raisons de clarté, les cotes et proportions des divers éléments ne sont pas respectées. Ces figures représentent :

- figures 1, 2, 3 et 4 des vues générales du capteur du dispositif de mesure de l'invention ;

- figures 5a et 5b, des schémas de bobinage et de connexions des enroulements du capteur précédent ;

- figure 6, la représentation schématique du dispositif de mesure de l'invention ;

- figures 7a et 7b, des diagrammes temporels de signaux intervenant dans le dispositif de mesure de l'invention.

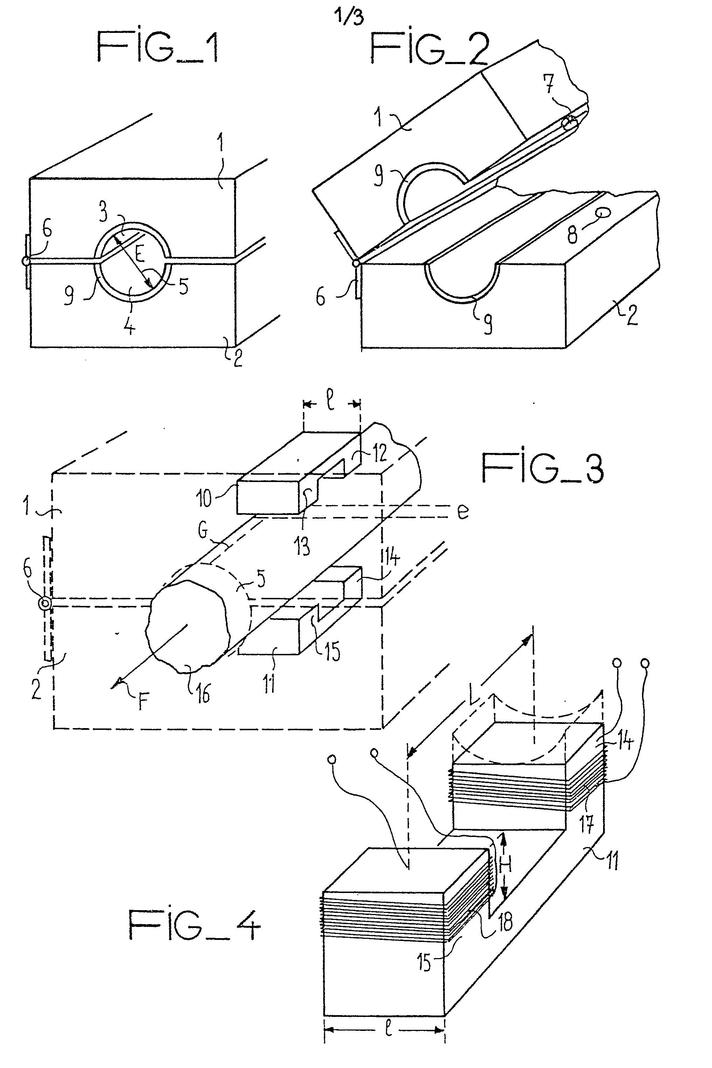

La figure 1 représente une réalisation préférée du capteur de l'invention. Celui-ci se présente sous la forme de deux parties dissociables, les pièces 1 et 2. Ces deux pièces ont sensiblement l'allure de deux parallélépipèdes rectangles munis chacun sur leur plus grande face d'une demi-gorge, respectivement 3 et 4, orientée parallèlement aux génératrices des parallélépipèdes. Les deux pièces 1 et 2 peuvent être accouplées pour que leurs demi-gorges viennent se faire face et pour qu'elles viennent déterminer ensemble un évidement 5 de section donnée. Sur la figure 1, l'évidement 5 a une section circulaire de diamètre E.

L'accouplement des pièces 1 et 2 peut être obtenu par tout moyen, notamment au moyen d'une charnière 6 permettant au capteur de s'ouvrir à la manière d'une tenaille (figure 2). Dans ces conditions, l'axe de la charnière est parallèle aux génératrices des parties 1 et 2. Un jeu de pions 7 fixés sur la partie 1 et venant s'emboiter dans des réservations 8 pratiquées dans la partie 2, vient compléter l'ajustage de la mise en place des parties 1 et 2. Un verrou non représenté peut venir compléter le système d'accouplement pour assurer une fermeture durable du capteur. En effet, lors de son utilisation effective le capteur sera en position fermée. La position ouverte représentée sur la figure 2 a pour but de permettre une mise en place aisée du capteur autour d'un objet long à tester et dont la section viendra avantageusement correspondre à la forme de l'évidement 5. On remarque sur les figures 1 et 2 un chanfrein 9 pratiqué dans l'extrémité de chacune des pièces 1 et 2 et ayant pour but de faciliter l'utilisation du capteur dans des conditions identiques à celles pour lesquelles étaient conçus les dispositifs de l'art cité. Dans un exemple, le matériau constitutif des parties 1 et 2 est à base de résine polyamide.

Sur la figure 3, les parties 1 et 2 sont tracées en tirets et l'on constate qu'elles contiennent chacune un cavalier respectivement 10 et 11. Ces cavaliers sont réalisés en matériau magnétique. La perméabilité de ce matériau est élevée de manière à présenter un chemin préférentiel pour des lignes de champ magnétique. Ces cavaliers ont une largeur $l$ mesurée perpendiculairement à l'orientation de l'évidement, sensiblement égale à la largeur de l'évidement. Ils sont disposés en regard des demi-gorges 3 et 4. Ces cavaliers s'étendent dans les pièces 1 et 2 dans le sens de l'évidement 5, approximativement en son milieu, et ils comportent chacun deux jambes. En considérant un sens de défilement selon la flèche F de l'objet longitudinal 16 à contrôler on détermine l'amont et l'aval du capteur. Les jambes amont 12 du cavalier 10 et 14 du cavalier 11 sont disposées en vis-à-vis. Il en est de même des jambes 13 et 15 respectivement des cavaliers 10 et 11 en aval du capteur. Cette notion d'amont et d'aval a pour but de faciliter la description de l'invention. Dans la pratique l'utilisation du capteur est bien entendu réversible.

Tels que ces cavaliers sont disposés sur la figure 3 on constate qu'ils collaborent à la fermeture d'un circuit magnétique possédant deux entrefers, l'entrefer amont entre l'extrémité polaire de la jambe 12 et l'extrémité polaire de la jambe 14, et l'entrefer aval entre l'extrémité polaire de la jambe 15 et l'extrémité polaire de la jambe 13. La hauteur de ces entrefers sera égale à la somme de l'espacement $e$, séparant la face inférieure d'une extrémité polaire d'une jambe de la génératrice supérieure G de l'évidement 5, ajoutée à la hauteur de l'évidement 5 et à un deuxième espacement identique, non représenté, séparant la génératrice inférieure de l'évidement de l'extrémité polaire de la jambe située en vis-à-vis. Dans le cas où le produit à mesurer a une section circulaire de diamètre voisin de E, la hauteur de chacun de ces deux entrefers sera égale à (e + E + e). Il apparaît ici que le champ magnétique qui est créé entre les extrémités polaires des jambes dans les deux entrefers traversera le matériau en défilement avec une orientation sensiblement perpendiculaire à ce défilement. Une différence essentielle apparaît donc avec l'art cité où le champ induit utile traversait l'objet à mesurer dans un sens parallèle au défilement.

Sur la figure 4, qui est une vue de détail de la précédente, on a représenté le cavalier inférieur 11 muni de ses jambes amont 14 et aval 15. Pour des raisons de commodité de fabrication, les jambes de ce cavalier de hauteur H mesurée dans l'alignement de l'entrefer, sont formés d'éléments parallélépipèdiques. Sur la figure 4 la largeur $l$ du cavalier apparaît comme étant la plus grande dimension de la section parallélépipèdique des jambes. Pour former le cavalier les jambes 14 et 15 sont couplées magnétiquement par une partie parallélépipèdique de section correspondante. La jambe amont est séparée de la jambe aval par une distance L. La justification de cette distance sera vue plus loin.

Des enroulements, respectivement 17 et 18 sont bobinés autour des jambes amont 14 et aval 15. D'autres enroulements sont bobinés sur les jambes du cavalier 10. Lorsque ces enroulements sont alimentés par une source de courant variable ils produisent un champ magnétique dont les lignes de champ s'élèvent perpendiculairement à la surface des extrémités polaires des jambes. En conséquence, il y a lieu d'adapter la surface de ces extrémités polaires à la forme de la section des objets en défilement à contrôler. Diverses formes peuvent être imaginées. Pour la mesure d'objets de section ronde les surfaces des extrémités polaires des jambes seront préférentiellement plates.On a représenté en pointillés une autre forme possible de l'extrémité polaire de la jambe 14 ayant l'allure d'une cuvette

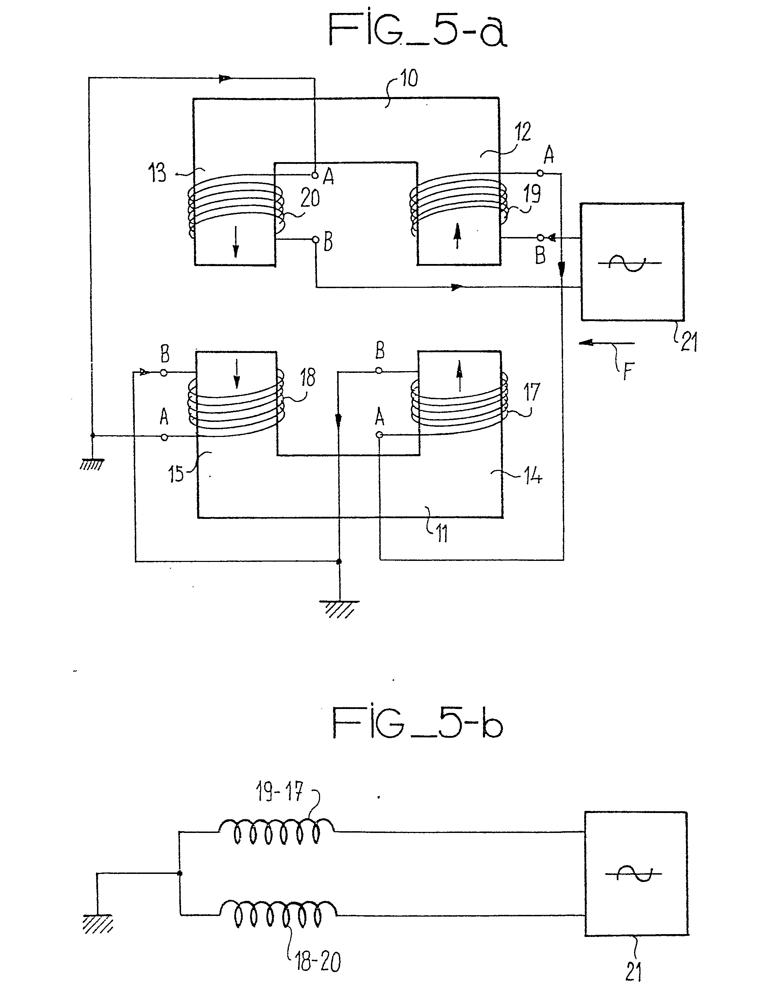

La figure 5A représente l'ensemble des connexions des enroulements 17, 18 et 19, 20 respectivement des cavaliers 11 et 10. Les objets longs à controler défilent entre les entrefers de ces cavaliers dans le sens de la flèche F. Dans ce montage tous les enroulements sont alimentés en série à partir d'une source unique 21 de courant variable. Les sens des flèches figurant sur les conducteurs reliant les enroulements entre eux et à la source 21 correspondent à une alternance donnée du courant variable. Les flèches dessinées dans les cavaliers désignent l'orientation concomitante du champ magnétique qui en résulte.

On va décrire précisément les sens des enroulements et l'organisation des connexions de la figure 5, cependant, comme il est connu de l'homme de l'art, il est possible d'obtenir le même effet en modifiant pour un même enroulement à la fois le sens de l'enroulement et l'organisation des connexions. Par ailleurs, les enroulements sont connectés en une série 19, 17, 18, 20 qui pourrait être aménagée autrement pour les besoins de la cause. Les enroulements sont câblés entre eux de manière à ce que pour une alternance donnée le champ magnétique créé produise un flux d'induction circulant dans un seul sens dans le circuit magnétique. Le champ magnétique traverse alors les objets en amont et en aval avec des sens inverses.

On constate que tous les enroulements sont, dans l'exemple, bobinés d'une manière dextrogyre. Le résultat obtenu sera le même si tous les enroulements étaient bobinés d'une manière légogyre. On constate une identité de bobinage entre les enroulements 19 et 20 du cavalier 10 d'une part et entre les enroulements 17 et 18 du cavalier 11 d'autre part. En effectuant mentalement une double rotation sur lui-même du cavalier 11 on constate que les enroulements de ce cavalier sont bobinés exactement de la même manière que les enroulements du cavalier 10, l'enroulement 17 étant bobiné de la même manière que l'enroulement 20, et l'enroulement 18 étant bobiné de la même manière que l'enroulement 19. La conséquence de cet état de chose en est une réalisation simplifiée du capteur de l'invention puisqu'en définitive tous les enroulements des cavaliers sont ainsi bobinés d'une manière identique.

En ce qui concerne les connexions on détermine que les bobinages ont tous une extrémité nommée B située à proximité de l'extrémité polaire de la jambe du cavalier alors que l'autre extrémité du bobinage nommée A s'en trouve éloignée. Le raccordement des bobinages de la série 19, 17, 18 et 20 s'effectue simplement en reliant les bobinages en série par leurs extrémités de même nom A ou B. Les extrémités B restées libres des bobinages 19 et 20 sont alors raccordées à la source de courant variable 21.

La connexion ainsi réalisée revient à construire un pont diviseur inductif 19-17 et 18-20 visible sur la figure 5b. Ce pont diviseur inductif est équilibré puisque tous les bobinages sont identiques. Lorsqu'un défaut de l'objet à contrôler arrive dans l'entrefer amont 17, 19 il provoque une modification de l'impédance magnétique de cet entrefer et déséquilibre le pont. Quand ce défaut pénètre dans l'entrefer aval il déséquilibre une nouvelle fois le pont mais dans un sens différent. En effet, par exemple, lors de sa présence en amont l'impédance magnétique de l'entrefer amont est plus grande que l'impédance magnétique de l'entrefer aval, et lors de sa présence en aval c'est l'impédance magnétique de l'entrefer aval qui est plus grande que l'impédance magnétique de l'entrefer amont. La nature plus grande ou plus petite de l'impédance magnétique résultant du défaut est liée à la nature du défaut constaté.

Compte tenu de la vitesse de défilement de l'objet à controler à l'intérieur du capteur cette modification variable d'impédance se produit pendant une durée dépendant de la longueur L des cavaliers. Cette durée est assimilable alors à la période d'un signal variable de fréquence donnée. La longueur L est choisie en fonction de la grosseur d'un defaut attendu à repérer. L est d'une manière préférée plus grande que cette grosseur.

On peut remarquer que le montage à quatre enroulements peut être notablement simplifié. Dans cette simplification seul l'enroulement 19 subsisterait, bobiné autour de la jambe 12 du cavalier 10. L'autre cavalier 11 ne comporterait aucun bobinage. Dans ces conditions l'apparition d'un défaut dans l'entrefer amont provoquerait de toutes façons la modification de l'impédance magnétique de cet entrefer. Par un pont de mesure d'impédance connu de l'homme de l'art, il est possible alors d'exploiter cette information. Dans ce montage simplifié l'orientation des cavaliers peut être orthogonale à la direction de l'évidement et le deuxième entrefer peut être alors notablement réduit.

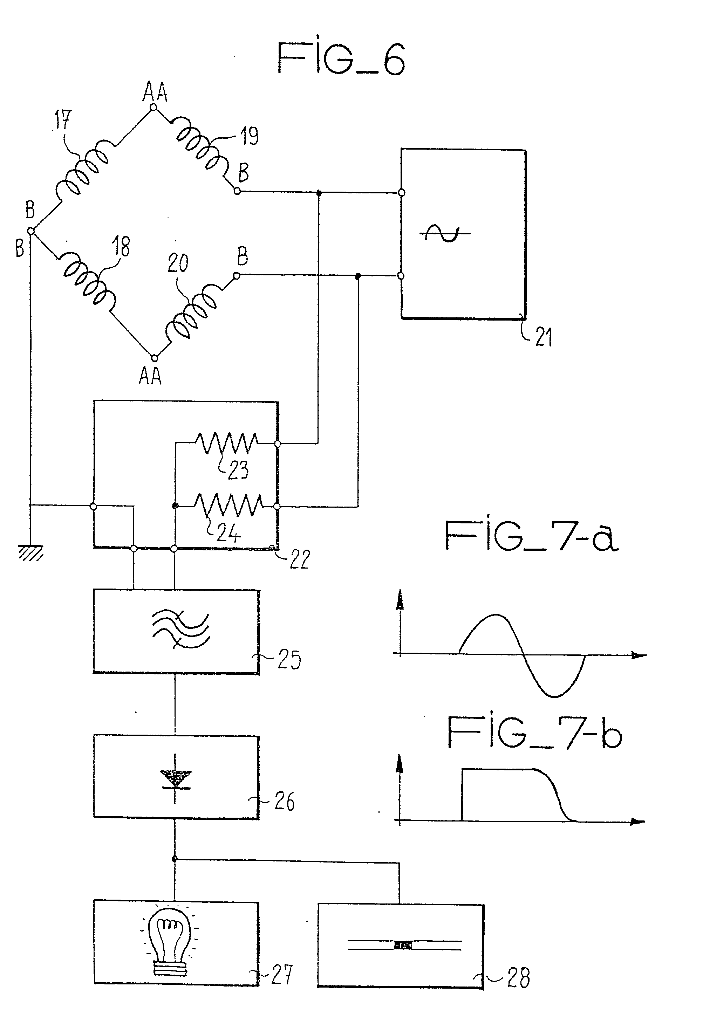

La figure 6 représente le dispositif de mesure de l'invention. Sur cette figure un pont de mesure résistif 22 est branché aux bornes de la source de courant variable 21. Ce pont de mesure 22 comporte essentiellement deux résistances branchées en série avec la source de courant 21 numérotées 23 et 24 et égales entre elles. Le signal représentant le défaut constaté est prélevé entre le point milieu de ces résistances 23 et 24 et entre le point milieu des couples d'enroulements 17-19 et 18-20. Pour des raisons de commodité, ce point milieu des enroulements est relié à la masse. Plus généralement la reconnaissance du déséquilibre du pont diviseur inductif peut être décelée par tout autre moyen connu.

Ce signal ainsi prélevé entre le pont mesure résistif et le capteur est introduit aux bornes d'un filtre sélectif passe-bande 25. La fréquence centrale de ce filtre sélectif est ajustée sur la fréquence du signal variable résultant du passage du défaut d'une extrémité à l'autre du capteur. Le signal délivré par ce filtre 25 a l'allure d'une double alternance représenté en regard sur la figure 7a. Ce signal est alors envoyé sur un détecteur 26 élaborant un signal de type impulsionnel comme représenté sur la figure 7b. Ce signal impulsionnel peut alors être exploité dans un dispositif d'alarme 27 ou dans un dispositif de marquage 28 disposé en aval du capteur. Après une temporisation dépendant de la vitesse de défilement de l'objet et de l'éloignement du dispositif de marquage par rapport au capteur, celui-ci projette un jet de peinture sur l'objet défilant. Cette disposition assure un repérage durable de la position du défaut constaté.

Dans une application la vitesse de défilement des objets à mesurer peut être de l'ordre de 200m par minute. L'inductance magnétique des enroulements bobinés sur les cavaliers peut avoir une valeur comprise entre 2 microHenry et 200 milliHenry. La longueur L est de l'ordre de 45mm, la hauteur H est de l'ordre de 10mm, la largeur $\underline{l}$ du même ordre que le diamètre E peut prendre les valeurs normalisées suivantes : 9mm, 13mm, 15,5mm, 18mm, 20,5mm et 22,5mm ; enfin l'espace $\underline{e}$ peut valoir 0,1mm à 0,2mm. L'invention s'applique notamment au contrôle en continu de la fabrication de câbles électriques.

# REVENDICATIONS

1. Dispositif de mesure des défauts structurels d'objets (16) en défilement comportant au moins un enroulement (19) selfique, alimenté par une source (21) de courant variable pour produire un champ magnétique variable passant au travers des objets en défilement, et associé à un pont (22) de mesure pour élaborer un signal d'alarme lors de l'apparition d'un défaut dans les objets en défilement, caractérisé en ce qu'il comporte des moyens (10, 11) pour que les lignes du champ magnétique passent au travers des objets avec une orientation sensiblement perpendiculaire à leur défilement.

2. Dispositif selon la revendication 1 caractérisé en ce qu'il comporte deux parties (1, 2) dissociables, opposables en vis-à-vis, déterminant entre elles un évidement (5) longitudinal de section correspondant à la section des objets en défilement à mesurer, et collaborant à la fermeture d'un circuit magnétique parcouru par les lignes de champ perpendiculaires par l'intermédiaire de deux cavaliers magnétiques (10, 11).

3. Dispositif selon la revendication 2 caractérisé en ce qu'il comporte quatre enroulements (19, 17, 18, 20) selfiques couplés magnétiquement deux à deux respectivement par deux cavaliers magnétiques, lesdits cavaliers étant disposés de façon correspondante dans lesdites parties dissociables pour que les lignes de champ du circuit magnétique passent deux fois, en des endroits différents, au travers des objets en défilement, les enroulements étant électriquement connectés pour que ces lignes traversent les objets en ces endroits avec des sens à tout instant inverses l'un de l'autre.

4. Dispositif selon la revendication 3 caractérisé en ce que les deux endroits sont distants l'un de l'autre d'une distance (L) déterminée par la nature des défauts attendus et par la vitesse de défilement des objets.

5. Dispositif selon l'une quelconque des revendications 2 à 4 caractérisé en ce que les cavaliers comportent chacun deux jambes de forme parallélépipèdique et en ce que les extrémités polaires de ces jambes sont plates.

6. Dispositif selon l'une quelconque des revendication 3 à 5 caractérisé en ce que tous les enroulements sont bobinés de manière identique sur les jambes des cavaliers, en ce que les cavaliers sont identiques et en ce que les enroulements sont connectés en série avec la source de courant variable.

7. Dispositif selon l'une quelconque des revendications 3 à 6 caractérisé en ce que le pont de mesure est un pont de mesure résistif (23, 24) et en ce que la mesure des défauts est effectuée en prélevant le signal apparaissant entre le point milieu de ce pont de mesure et le point milieu des enroulements.

8. Dispositif selon l'une quelconque des revendications 1 à 7 caractérisé en ce qu'il comporte en outre en cascade avec le pont de mesure un filtre (25) sélectif passe-bande et un détecteur (26) pour permettre la reconnaissance d'un défaut attendu.

9. Utilisation d'un dispositif de mesure selon l'une quelconque des revendications 1 à 8 dans une ligne de fabrication en continu de cables électriques.

0116242

FIG_1

FIG_2

1/3

FIG_3

FIG_4

# FIG_5-a

# FIG_5-b

FIG_6

FIG_7-a

FIG_7-b

0116242

3/3

**0116242**

Numero de la demande

**RAPPORT DE RECHERCHE EUROPEENNE**

Office européen
des brevets

EP 83 40 2384

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-2 534 420 (J.J. DELANEY) <br> * colonne 3, lignes 18-42; figure 1 * | 1-3 | G 01 N 27/90 |
| Y | FR-A-1 553 745 (THE BRITISH IRON AND STEEL RESEARCH ASSOCIATION) <br> * page 2, colonne de droite, paragraphe 2; figure 2 * | 1-3 | |
| A | US-A-3 437 918 (A.I. ARNELO) <br> * figures 1,2 * | 1 | |
| A | US-A-3 535 625 (N.F. PRATT) <br> * figure 1 * | | |
| A | FR-A-2 290 748 (CENTRE TECHNIQUE DES INDUSTRIES MECANIQUES) <br> * figures 1,2 * | 1 | DOMAINES TECHNIQUES RECHERCHES (Int. Cl. ³) <br> G 01 N 27/90 <br> G 01 N 27/82 |
| A | US-A-2 084 274 (A.E.F. BILLSTEIN) <br> * figure 10 * | | |

--- -/-

Le présent rapport de recherche a été établi pour toutes les revendications

| Lieu de la recherche <br> LA HAYE | Date d'achèvement de la recherche <br> 27-03-1984 | Examinateur <br> DUCHATELLIER M.A. |
|---|---|---|

**Office européen**
**des brevets**

## RAPPORT DE RECHERCHE EUROPEENNE

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | SOVIET MATERIALS SCIENCE, vol. 10, no. 5, février 1976, Plenum Publishing Corp., New York (US) V.V. PANASYUK et al.: "Eddy-current sensor for measuring the length of a through crack propagating in a metal plate", pages 577-579. * figure 1 * | 1 | |
| | ----- | | |
| | | | DOMAINES TECHNIQUES RECHERCHES (Int. Cl ³) |

Le présent rapport de recherche a eté etabli pour toutes les revendications

| Lieu de la recherche | Date d'achèvement de la recherche | Examinateur |
|---|---|---|
| LA HAYE | 27-03-1984 | DUCHATELLIER M.A. |

CATEGORIE DES DOCUMENTS CITES

X . particulierement pertinent à lui seul
Y : particulièrement pertinent en combinaison avec un autre document de la même categorie
A : arrière-plan technologique
O . divulgation non-écrite
P · document intercalaire

T : théorie ou principe à la base de l'invention
E : document de brevet antérieur, mais publié à la date de depôt ou après cette date
D : cité dans la demande
L : cité pour d'autres raisons

 

& : membre de la même famille, document correspondant

OEB Form 1503 03.82